# EUROPÄISCHE PATENTSCHRIFT

(11) **EP 4 298 721 B1**
(45) Veröffentlichungstag und Bekanntmachung des Hinweises auf die Patenterteilung: **20.08.2025**
(21) Anmeldenummer: 22711436.0
(22) Anmeldetag: 28.02.2022
(51) Int. Cl.: H02P 3/14, H02P 3/22, B65G 1/04, H02J 3/00, H02J 7/34, H02J 7/00

(54) **VERFAHREN UND REGALLAGERSYSTEM MIT ERHÖHTER SICHERHEIT BEIM ANHALTEN EINES REGALBEDIENGERÄTS**
METHOD AND SHELF STORAGE SYSTEM WITH INCREASED SAFETY WHEN STOPPING A STORAGE AND RETRIEVAL MACHINE
PROCÉDÉ ET SYSTÈME D'EMMAGASINAGE À RAYONNAGE PRÉSENTANT UNE SÉCURITÉ ACCRUE LORS DE L'ARRÊT D'UN TRANSTOCKEUR

(30) Priorität: 26.02.2021 AT 501362021
(43) Veröffentlichungstag der Anmeldung: 03.01.2024
(73) Patentinhaber: TGW Logistics GmbH, 4614 Marchtrenk (AT)
(72) Erfinder: HAILER, Emanuel, 4713 Gallspach (AT)
(74) Vertreter: Burger, Hannes
(86) Internationale Anmeldenummer: PCT/AT2022/060053
(87) Internationale Veröffentlichungsnummer: WO 2022/178567

(56) Entgegenhaltungen:
- EP-A1- 3 543 200
- WO-A2-2016/094923

## Beschreibung

Die Erfindung betrifft ein Verfahren zum Betrieb eines Regalbediengeräts, bei dem das Regalbediengerät einen Wechselrichter und einen damit verbindbaren Antriebsmotor für das Regalbediengerät aufweist, und bei dem der Wechselrichter zumindest zeitweise elektrisch mit einem Energiespeicher verbunden ist, welcher über eine Versorgungsschaltung mit einem elektrischen Versorgungsnetz verbunden ist. Weiterhin betrifft die Erfindung ein Regallagersystem, umfassend ein Regalbediengerät, welches einen Wechselrichter und einen damit verbindbaren Antriebsmotor für das Regalbediengerät aufweist, einen Energiespeicher, welcher zumindest zeitweise elektrisch mit dem Wechselrichter verbunden ist, und eine Versorgungsschaltung, welche mit einem elektrischen Versorgungsnetz und mit dem Energiespeicher verbunden ist.

Ein solches Verfahren und ein solches Regallagersystem sind grundsätzlich bekannt. Beispielsweise offenbart die EP 2 372 892 A1 dazu eine Vorrichtung und ein Verfahren zur Zwischenspeicherung elektrischer Bremsenergie eines an einem Wechselrichter betriebenen Motors. Wird eine maximale Spannung am Energiespeicherkondensator erreicht, wird der Bremswiderstand zugeschaltet, so dass ein Notbetrieb möglich ist und sich der Motor trotz vollem Energiespeicherkondensator bremsen lässt. Sobald der Energiespeicherkondensator wieder wenigstens teilweise entladen ist, übernimmt wieder der Energiespeicher die Speicherfunktion.

Die in der EP 2 372 892 A1 offenbarte Anordnung dient somit dem Schutz des Energiespeicherkondensators und geht dabei davon aus, dass zumindest ein Teil der rekuperativen Energie in den Energiespeicherkondensator rückgespeist werden kann und nur eine etwaige Überschussenergie thermisch umgewandelt wird. Der Bremswiderstand kann dementsprechend klein dimensioniert werden. Die EP 2 372 892 A1 geht jedoch nicht auf einen Fehlerfall ein, bei dem die beim Verzögern anfallende elektrische Energie gar nicht in den Energiespeicher rückgespeist werden kann, beispielsweise weil eine Störung im elektrischen Netz vorliegt.

Die EP 3 543 200 A1 offenbart dazu auch ein Regalbediengerät und ein Verfahren zur Steuerung desselben, bei dem elektrische Energie in einem Energiespeicher zwischengespeichert wird. Wenigstens ein elektrischer Betriebsparameter des Regalbediengeräts wird überwacht, und abhängig von diesem elektrischen Betriebsparameter wird die Einspeisung von elektrischer Energie in den Energiespeicher und/oder die Entnahme von elektrischer Energie aus dem Energiespeicher gesteuert.

Die WO 2016/094923 A2 offenbart zudem eine Lageranordnung mit mehreren Lagerplätzen für Stückgüter, mit mehreren automatisierten Regalbediengeräten zum Ein- und Auslagern der Stückgüter und mit zumindest einer Stromversorgung für die genannten Regalbediengeräte. Zusätzlich umfasst die Lageranordnung zumindest einen Stromspeicher für die Stromversorgung.

Eine Aufgabe der Erfindung ist es nun, ein verbessertes Verfahren und ein verbessertes Regallagersystem anzugeben. Insbesondere soll eine Möglichkeit geschaffen werden, ein Regalbediengerät auch dann elektrisch zu bremsen, wenn die beim Verzögern anfallende elektrische Energie nicht in den Energiespeicher rückgespeist werden kann.

Die Erfindung wird durch die Verfahrensansprüche 1 und 5 sowie durch die korrespondierenden Vorrichtungsansprüche 7 und 11 definiert.

Durch die vorgeschlagenen Maßnahmen wird gewährleistet, dass ein Regalbediengerät auch dann elektrisch gebremst werden kann, wenn die beim Verzögern anfallende elektrische Energie nicht in den Energiespeicher rückgespeist werden kann, beispielsweise weil eine Störung im elektrischen Netz vorliegt oder das Regalbediengerät vom elektrischen Netz oder vom Energiespeicher getrennt ist. Eine mechanische Bremse, insbesondere eine selbsthaltende mechanische Bremse, kann daher entfallen. Vorteilhaft ist dabei insbesondere, dass ein Regalbediengerät ohne weitere Maßnahmen leicht per Hand verschoben werden kann, wenn das Regalbediengerät angehalten hat, da die elektronische Bremse im Stillstand oder bei langsamer Fahrt keine oder nur eine vernachlässigbare Wirkung hat.

Bei dem vorliegenden Verfahren wird dabei eine zur EP 2 372 892 A1 diametrale Vorgangsweise eingeschlagen, weil dort ein Bremswiderstand zugeschaltet wird, wenn die maximale Spannung am Energiespeicherkondensator erreicht wird, wohingegen die Bremsenergie beim vorliegenden Verfahren in einen Bremswiderstand geleitet wird, wenn die Versorgungsspannung für den Wechselrichter unter dem ersten Versorgungsspannungs-Schwellwert oder unter einem niedrigeren zweiten Versorgungsspannungs-Schwellwert liegt und/oder wenn der Wechselrichter vom Energiespeicher elektrisch getrennt ist.

Der Energiespeicher kann insbesondere als stationärer Energiespeicher ausgebildet sein. Im Speziellen kann der Energiespeicher elektrisch mit Wechselrichtern mehrerer Regalbediengeräte verbunden sein. Das Regallagersystem ist dadurch hierarchisch aufgebaut.

Das Regalbediengerät ist zum Ein- und/oder Auslagern von Stückgütern in ein Lagerregal eines Regallagersystems ausgebildet. Vorzugsweise umfasst das Regalbediengerät eine Lastaufnahmevorrichtung zum Ein- und Auslagern von Stückgütern auf Lagerplätze im Regallagersystem. Die Lastaufnahmevorrichtung kann hierbei an beziehungsweise auf einer Ladeplattform angeordnet sein, wobei die Ladeplattform eine Aufnahmefläche für zumindest ein Stückgut bildet. Hierbei kann vorgesehen sein, dass das Regalbediengerät als Mehrebenenregalbediengerät ausgebildet ist. Das Mehrebenenregalbediengerät weist einen Mast auf, an welchem die Ladeplattform bewegbar ist. Alternativ kann vorgesehen sein, dass das Regalbediengerät als Einebenenregalbediengerät, beispielsweise als Shuttle ausgebildet ist.

Vorteilhafte Ausgestaltungen und Weiterbildungen der Erfindung ergeben sich nun aus den Unteransprüchen sowie aus der Beschreibung in Zusammenschau mit den Figuren.

Günstig ist es, wenn ein steuerbares Antriebsmotor-Schaltelement
den Antriebsmotor mit dem Wechselrichter verbindet, wenn die Versorgungsspannung für den Wechselrichter über dem ersten Versorgungsspannungs-Schwellwert liegt und/oder wenn der Wechselrichter elektrisch mit dem Energiespeicher verbunden ist, und
den Antriebsmotor mit dem Bremswiderstand verbindet, wenn die Versorgungsspannung für den Wechselrichter unter dem ersten Versorgungsspannungs-Schwellwert oder unter dem niedrigeren zweiten Versorgungsspannungs-Schwellwert liegt und/oder wenn der Wechselrichter vom Energiespeicher elektrisch getrennt ist.

Das Antriebsmotor-Schaltelement kann als elektronisches Schaltelement ausgebildet sein, zum Beispiel als Transistor, oder als elektromechanisches Schaltelement, beispielsweise als Relais.

Eine erste Steuerung für das steuerbare Antriebsmotor-Schaltelement kann dabei dazu ausgebildet sein, eine Versorgungsspannung für den Wechselrichter und/oder den Status einer elektrischen Verbindung zwischen dem Wechselrichter und dem Energiespeicher zu erfassen und das steuerbare Antriebsmotor-Schaltelement so anzusteuern,
dass das steuerbare Antriebsmotor-Schaltelement den Antriebsmotor mit dem Wechselrichter verbindet, wenn die erste Steuerung für das steuerbare Antriebsmotor-Schaltelement eine Versorgungsspannung für den Wechselrichter über einem ersten Versorgungsspannungs-Schwellwert feststellt, und/oder feststellt, dass der Wechselrichter elektrisch mit dem Energiespeicher verbunden ist, und
dass das steuerbare Antriebsmotor-Schaltelement den Antriebsmotor mit dem Bremswiderstand verbindet, wenn die erste Steuerung für das steuerbare Antriebsmotor-Schaltelement eine Versorgungsspannung für den Wechselrichter unter dem ersten Versorgungsspannungs-Schwellwert oder unter einem niedrigeren zweiten Versorgungsspannungs-Schwellwert feststellt, und/oder feststellt, dass der Wechselrichter vom Energiespeicher elektrisch getrennt ist.

Die erste Steuerung für das steuerbare Antriebsmotor-Schaltelement ist dazu mit einem Steuereingang des Antriebsmotor-Schaltelements verbunden, also zum Beispiel mit einem Gate-Anschluss oder Basis-Anschluss eines Transistors oder mit einer Steuerspule eines Relais.

Von Vorteil ist es auch, wenn das Antriebsmotor-Schaltelement bei dem vorgestellten Verfahren ein Antriebsmotor-Relais umfasst oder als solches ausgebildet ist und ein Schaltkontakt des Antriebsmotor-Relais
den Antriebsmotor mit dem Wechselrichter verbindet, wenn eine auf den Schaltkontakt wirkende Steuerspule des Antriebsmotor-Relais, welche in einem zwischen dem Schaltkontakt und dem Energiespeicher liegenden Strompfad angeordnet ist, mit einer über einer Einschaltspannung des Antriebsmotor-Relais liegenden Spannung versorgt wird und das Antriebsmotor-Relais angezogen ist, und
den Wechselrichter mit dem Bremswiderstand verbindet, wenn die Spannung an der Steuerspule unterhalb einer Ausschaltspannung des Antriebsmotor-Relais liegt und das Antriebsmotor-Relais abgefallen ist.

In gleicher Weise ist es von Vorteil, wenn das Antriebsmotor-Schaltelement bei dem vorgestellten Regallagersystem ein Antriebsmotor-Relais umfasst oder als solches ausgebildet ist und der Antriebsmotor über einen Schaltkontakt des Antriebsmotor-Relais mit dem Wechselrichter oder dem Bremswiderstand verbindbar ist und eine auf den Schaltkontakt wirkende Steuerspule des Antriebsmotor-Relais in einem zwischen dem Schaltkontakt und dem Energiespeicher liegenden Strompfad angeordnet ist.

Bei dieser Ausführungsform kann eine gesonderte erste Steuerung für das Antriebsmotor-Schaltelement entfallen, da die Umschaltung des Antriebsmotors zwischen dem Energiespeicher und dem Bremswiderstand direkt von der Steuerspule des Antriebsmotor-Relais übernommen wird. Diese Ausführungsform ist daher besonders einfach aufgebaut und besonders betriebssicher.

Günstig ist es weiterhin, wenn ein steuerbares Energiespeicher-Schaltelement
den Wechselrichter mit dem Energiespeicher verbindet, wenn eine Netzspannung des elektrischen Versorgungsnetzes über einem ersten Netzspannungs-Schwellwert liegt und/oder wenn der Energiespeicher elektrisch mit dem elektrischen Versorgungsnetz verbunden ist, und
den Wechselrichter vom Energiespeicher trennt, wenn die Netzspannung des elektrischen Versorgungsnetzes unter dem ersten Netzspannungs-Schwellwert oder unter einem niedrigeren zweiten Netzspannungs-Schwellwert liegt und/oder wenn der Energiespeicher vom elektrischen Versorgungsnetz elektrisch getrennt ist.

Das Energiespeicher-Schaltelement kann ebenfalls als elektronisches Schaltelement ausgebildet sein, zum Beispiel als Transistor, oder als elektromechanisches Schaltelement, beispielsweise als Relais.

Mit Hilfe des Energiespeicher-Schaltelements kann das Regalbediengerät spannungslos geschaltet werden. Dies kann aktiv durch einen Benutzer erfolgen, der zum Beispiel das Regalbediengerät warten möchte, oder aufgrund eines Zustandes des Versorgungsnetzes. Fällt dieses beispielsweise aus, so könnten Personen, die keine genaue Kenntnis über den elektrischen Aufbau des Regallagersystems haben, von der irrigieren Annahme ausgehen, dass das Regalbediengerät bei Ausfall des Versorgungsnetzes spannungslos ist. Dies ist aber wegen des Energiespeichers, welcher auch bei Ausfall des Versorgungsnetzes mit einer lebensgefährlichen Spannung geladen sein kann, nicht zwingend der Fall. Auch könnte sich das Regalbediengerät mit der Energie aus dem Energiespeicher aktiv und gegebenenfalls unkontrolliert bewegen. Aus Sicherheitsgründen wird der Energiespeicher daher bei Ausfall des Versorgungsnetzes vom Regalbediengerät weggeschaltet, sodass der Zutritt beispielsweise zu einer Regalgasse ungefährlich ist.

Eine zweite Steuerung für das steuerbare Energiespeicher-Schaltelement kann dabei dazu ausgebildet sein, eine Netzspannung des elektrischen Versorgungsnetzes und/oder den Status einer elektrischen Verbindung zwischen dem Energiespeicher und dem elektrischen Versorgungsnetz zu erfassen und das steuerbare Energiespeicher-Schaltelement so anzusteuern,
dass das steuerbare Energiespeicher-Schaltelement den Wechselrichter mit dem Energiespeicher verbindet, wenn die zweite Steuerung für das steuerbare Energiespeicher-Schaltelement eine Netzspannung des elektrischen Versorgungsnetzes über einem ersten Netzspannungs-Schwellwert feststellt, und/oder feststellt, dass der Wechselrichter elektrisch mit dem Versorgungsnetz verbunden ist, und
dass das steuerbare Energiespeicher-Schaltelement den Wechselrichter vom Energiespeicher trennt, wenn die zweite Steuerung für das steuerbare Energiespeicher-Schaltelement eine Netzspannung des elektrischen Versorgungsnetzes unter dem ersten Netzspannungs-Schwellwert oder unter einem niedrigeren zweiten Netzspannungs-Schwellwert feststellt, und/oder feststellt, dass der Wechselrichter vom Versorgungsnetz elektrisch getrennt ist.

Die zweite Steuerung für das steuerbare Energiespeicher-Schaltelement ist dazu mit einem Steuereingang des Energiespeicher-Schaltelements verbunden, also zum Beispiel mit einem Gate-Anschluss oder Basis-Anschluss eines Transistors oder mit einer Steuerspule eines Relais.

Von Vorteil ist es auch, wenn das Energiespeicher-Schaltelement bei dem vorgestellten Verfahren ein Energiespeicher-Relais umfasst oder als solches ausgebildet ist und ein Schaltkontakt des Energiespeicher-Relais
den Wechselrichter mit dem Energiespeicher verbindet, wenn eine auf den Schaltkontakt wirkende Steuerspule des Energiespeicher-Relais, welche in einem zwischen dem Energiespeicher und dem elektrischen Versorgungsnetz liegenden Strompfad angeordnet ist, mit einer über einer Schaltspannung des Energiespeicher-Relais liegenden Spannung versorgt wird und das Energiespeicher-Relais angezogen ist, und
den Wechselrichter vom Energiespeicher trennt, wenn die Spannung an der Steuerspule unterhalb der Schaltspannung des Energiespeicher-Relais liegt und das Energiespeicher-Relais abgefallen ist.

In gleicher Weise ist es von Vorteil, wenn das Energiespeicher-Schaltelement bei dem vorgestellten Regallagersystem ein Energiespeicher-Relais umfasst oder als solches ausgebildet ist und der Wechselrichter über einen Schaltkontakt des Energiespeicher-Relais mit dem Energiespeicher verbindbar und von diesem trennbar ist und eine auf den Schaltkontakt wirkende Steuerspule des zweiten Relais in einem zwischen dem Energiespeicher und dem elektrischen Versorgungsnetz liegenden Strompfad angeordnet ist.

Bei dieser Ausführungsform kann eine gesonderte zweite Steuerung für das Energiespeicher-Schaltelement entfallen, da das Verbinden des Energiespeichers mit dem Wechselrichter und das Trennen des Energiespeichers vom Wechselrichter direkt von der Steuerspule des Energiespeicher-Relais übernommen wird. Diese Ausführungsform ist daher ebenfalls besonders einfach aufgebaut und besonders betriebssicher.

Generell bewirkt eine Trennung des Energiespeichers vom Wechselrichter auch ein Umschalten des Antriebsmotors auf den Bremswiderstand, entweder durch Auswertung des Schaltzustands des Energiespeicher-Schaltelements im Regalbediengerät oder durch den mit der Trennung verbundenen Spannungsabfall am Wechselrichter. In besonders vorteilhafter Weise wird solcherart eine Schalt-Kaskade gebildet.

An dieser Stelle wird auch angemerkt, dass sich die zum vorgestellten Verfahren offenbarten Varianten und Vorteile gleichermaßen auf das vorgestellte Regallagersystem beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: ein beispielhaft und schematisch dargestelltes Regallagersystem mit mehreren Mehrebenenregalbediengeräten und einer zugeordneten Stromversorgung;
- Fig. 2: eine Vorderansicht auf ein Regallagersystem mit mehreren Einebenenregalbediengeräten, die von einer Stromversorgung versorgt werden;
- Fig. 3: eine Vorderansicht auf ein Regallagersystem mit mehreren Einebenenregalbediengeräten, die von mehreren Stromversorgungen versorgt werden;
- Fig. 4: ein elektrisches Prinzipschaltbild eines Regallagersystems mit einem gesteuerten Antriebsmotor-Schaltelement;
- Fig. 5: ein elektrisches Prinzipschaltbild eines Regallagersystems mit einem Antriebsmotor-Schaltelement, das als Relais ausgebildet ist und dessen Steuerspule mit dem Wechselrichtereingang verbunden ist;
- Fig. 6: wie Fig. 4, jedoch mit einem gesteuerten Energiespeicher-Schaltelement;
- Fig. 7: wie Fig. 5, jedoch mit einem Energiespeicher-Schaltelement, das als Relais ausgebildet ist und dessen Steuerspule mit dem Gleichrichtereingang verbunden ist; und
- Fig. 8: wie Fig. 7, jedoch mit einem Antriebsmotor-Schaltelement dessen Steuerspule mit dem Wechselrichterausgang verbunden ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

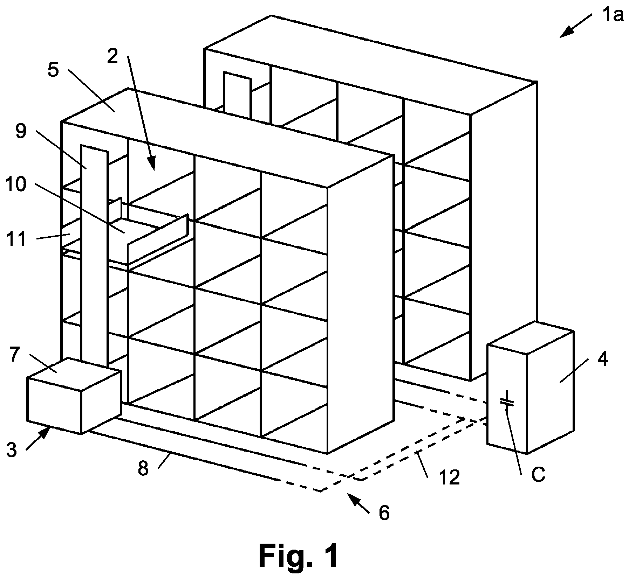

Fig. 1 zeigt ein Regallagersystem 1a mit mehreren Lagerplätzen 2, die nebeneinander und übereinander angeordnet sind, sowie mit mehreren rechnergesteuerten Regalbediengeräten 3, welche relativ zu den Lagerplätzen 2 verfahrbar sind (Anmerkung: in der Fig. 1 ist das hintere Regalbediengerät 3 nur zu einem geringen Teil sichtbar). Das Regallagersystem 1a umfasst weiterhin eine Stromversorgung 4 für die genannten Regalbediengeräte 3 sowie einen Energiespeicher C, welcher im gezeigten Beispiel in die Stromversorgung 4 integriert ist.

Die Lagerplätze 2 sind in diesem Beispiel in Regalreihen 5 organisiert, welche benachbart zu Regalgassen 6 angeordnet sind und in Tiefenrichtung ein einziges Stückgut (einfachtiefe Lagerung) oder mehrere Stückgüter (mehrfachtiefe Lagerung) aufnehmen können. Die Regalbediengeräte 3 sind als Mehrebenenregalbediengeräte ausgeführt und umfassen jeweils ein Fahrgestell 7, das auf Schienen 8 verfahrbar ist, sowie einen Mast 9, welcher mit dem Fahrgestell 7 verbunden ist. In der Fig.1 fährt das Regalbediengerät 3 jeweils auf zwei Schienen 8, selbstverständlich kann ein Regalbediengerät 3 aber auch nur auf einer Schiene 8 fahren, welche insbesondere als I-Profil ausgebildet sein kann.

Weiterhin umfasst das genannte Mehrebenenregalbediengerät 3 eine an dem Mast 9 verfahrbare (heb- und senkbare) Ladeplattform 10. Auf der Ladeplattform 10 ist eine Lastaufnahmevorrichtung 11 zum Einlagern der Stückgüter auf die Lagerplätze 2 und Auslagern der Stückgüter von den Lagerplätzen 2 angeordnet. Die Ladeplattform 10 bildet eine Aufnahmefläche für zumindest ein Stückgut aus. Ein solches Mehrebenenregalbediengerät 3 ist beispielweise in der EP 2 419 365 B1 offenbart und ist Gegenstand dieser Offenbarung. Mit Hilfe der Mehrebenenregalbediengeräte 3 können in an sich bekannter Weise Stückgüter in einen Lagerplatz 2 eingelagert oder von diesem ausgelagert werden. Das betreffende Stückgut wird dabei mit Hilfe der Ladeplattform 10 von einer nicht dargestellten Zuförderanlage zu dem Lagerplatz 2 oder vom Lagerplatz 2 zu einer nicht dargestellten Abförderanlage transportiert. Die Zuförderanlage und/oder Abförderanlage können beispielsweise als Rollenförderer ausgebildet sein.

Über Stromleitungen 12 ist die Stromversorgung 4 elektrisch mit den Schienen 8 respektive mit den Mehrebenenregalbediengeräten 3 verbunden, sodass elektrische Antriebsmotoren derselben mit elektrischer Energie versorgt werden können. Ein erster Antriebsmotor (Fahrantrieb) dient der Fahrbewegung des Mehrebenenregalbediengeräts 3 entlang der Regalgasse 6, ein zweiter Antriebsmotor (Hubantrieb) dient einer Heb- und Senkbewegung der Ladeplattform 10 und ein dritter Antriebsmotor (Ein- und Auslagerantrieb) dient einer Ein- und Ausfahrbewegung der Lastaufnahmevorrichtung 11. Die Lastaufnahmevorrichtung 11 wiederum kann zumindest einen vierten Antriebsmotor umfassen, welcher einer Verstellbewegung eines Transportorgans zum Transport von Stückgütern zwischen dem Lagerplatz 2 und der Ladeplattform 10 dient. Selbstverständlich kann die Stromübertragung auch anders erfolgen, beispielsweise über Schleppkabel. In dem gezeigten Beispiel ist die Stromversorgung 4 zwei Mehrebenenregalbediengeräten 3 zugeordnet. Selbstverständlich könnte die Stromversorgung 4 aber auch mehr als zwei Mehrebenenregalbediengeräte 3 versorgen, oder es könnte auch je eine Stromversorgung 4 je einem Mehrebenenregalbediengerät 3 zugeordnet sein.

Nach einer möglichen Ausführung umfasst die Lastaufnahmevorrichtung 11 Teleskoparme, welche an beziehungsweise auf der Ladeplattform 10 angeordnet sind und jeweils senkrecht zur Regalgasse 6 ein/ausfahrbare Schlitten umfassen. Der äußere Schlitten der Teleskoparme umfasst zumindest an seinen gegenüberliegenden Enden angeordnete und relativ zur Ladeplattform 10 verstellbare Transportorgane, mittels welcher ein einzulagerndes oder auszulagerndes Stückgut hintergriffen werden kann. Eine solche Lastaufnahmevorrichtung 11 ist beispielweise aus der DE 20 2004 004 620 U1 und US 6,923,612 B2 bekannt und ist Gegenstand dieser Offenbarung.

Der Energiespeicher C ist bei dieser Ausführungsvariante direkt in der Stromversorgung 4 in einem gemeinsamen Schaltschrank untergebracht. Selbstverständlich könnte der Energiespeicher C auch in einem gesonderten Gehäuse untergebracht sein. Darüber hinaus wird angemerkt, dass in dem Schaltschrank der Stromversorgung 4 auch andere elektrische/elektronische Geräte zum Betrieb der Mehrebenenregalbediengeräte 3 untergebracht sein können, beispielsweise Schutzschalter, Schütze, Steuerungen, Messgeräte und dergleichen. Auch im Mehrebenenregalbediengerät 3 können selbstverständlich elektrische/elektronische Geräte zum Betrieb der Mehrebenenregalbediengeräte 3 untergebracht sein, insbesondere eine Steuerung für dasselbe.

Der Energiespeicher C dient allgemein dazu, eine beim Abbremsen eines Mehrebenenregalbediengeräts 3 generatorisch erzeugte Energie zu speichern und bei Bedarf, das heißt beim Beschleunigen dieses oder eines anderen Mehrebenenregalbediengeräts 3, wieder abzugeben. Auf diese Weise werden Stromspitzen in der Zuleitung zu der Stromversorgung 4 vermieden, und der Energiebedarf des Regallagersystems 1a wird vermindert. Das Gesagte bezieht sich dabei nicht nur auf das Abbremsen und Beschleunigen zum Beispiel des Fahrgestells 7, sondern auf alle bewegten Teile des Mehrebenenregalbediengeräts 3, insbesondere somit auch auf die Heb- und Senkbewegung der Ladeplattform 10.

Wie in der Fig. 1 dargestellt, ist der Energiespeicher C nicht am Regalbediengerät 3, sondern an einer (stationären) Stromversorgung 4 für die Regalbediengeräte 3 angeschlossen, um die von den Antriebsmotoren der Regalbediengeräte 3 generatorisch erzeugte Energie über die (bidirektional wirkende) Stromversorgung in den Energiespeicher C einzuspeisen.

In dem obigen Beispiel wurde davon ausgegangen, dass die Regalbediengeräte 3 als Mehrebenenregalbediengeräte ausgeführt und die Stromversorgung 4 und der Energiespeicher C den Regalbediengeräten 3 mehrerer Regalgassen 6 zugeordnet sind. Dies ist aber keineswegs die einzig vorstellbare Möglichkeit. So kann das Regallagersystem 1a auch nur eine Regalgasse 6 aufweisen. Auch ist es möglich, dass in der einzigen Regalgasse 6 oder den mehreren Regalgassen 6 in übereinander liegenden Ebenen jeweils zumindest ein Mehrebenenregalbediengerät angeordnet ist. Dadurch ergeben sich Lagerbereiche, in welchen die Lagerplätze 2 vorhanden sind, denen jeweils ein Mehrebenenregalbediengerät zugeordnet ist. In dieser Ausführung ist die Stromversorgung 4 und der Energiespeicher C mehreren Mehrebenenregalbediengeräten 3 einer Regalgasse 6 zugeordnet. Ist nur eine Regalgasse 6 und ein Mehrebenenregalbediengerät 3 in dieser Regalgasse 6 vorgesehen, so ist die Stromversorgung 4 und der Energiespeicher C nur diesem Mehrebenenregalbediengerät 3 zugeordnet.

Denkbar ist auch, dass die Regalbediengeräte als Einebenenregalbediengeräte ausgeführt sind. Insbesondere können die Stromversorgung 4 und der Energiespeicher C Einebenenregalbediengeräten mehrerer Ebenen einer Regalgasse 6 zugeordnet sein, wobei die Lagerplätze 2 wiederum in Regalreihen 5 organisiert sind, welche benachbart zu zumindest einer Regalgasse 6 angeordnet sind.

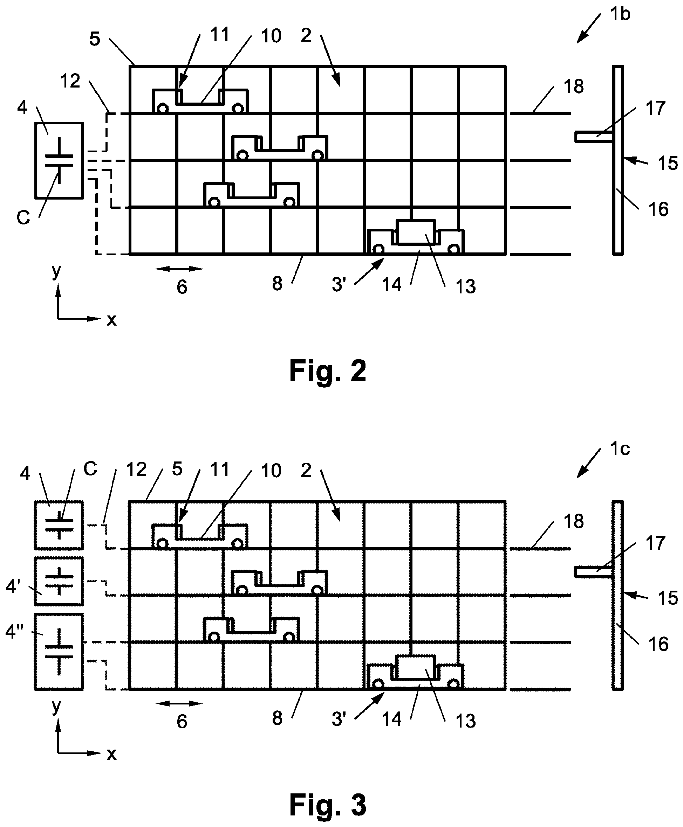

Fig. 2 zeigt dazu ein Beispiel eines Regallagersystems 1b mit einer Regalreihe 5 mit mehreren Lagerplätzen 2, die in vier Ebenen angeordnet sind. In jeder Ebene ist ein Einebenenregalbediengerät 3' vorgesehen, welches Stückgüter 13 von und zu den Lagerplätzen 2 einer Ebene befördern kann. Die Regalbediengeräte sind als Einebenenregalbediengeräte 3' ausgeführt und umfassen jeweils ein Fahrgestell 14, das auf Schienen 8 verfahrbar ist, sowie eine Ladeplattform 10. Auf beziehungsweise an der Ladeplattform 10 ist eine Lastaufnahmevorrichtung 11 zum Einlagern der Stückgüter 13 auf die Lagerplätze 2 und Auslagern der Stückgüter 13 von den Lagerplätzen 2 angeordnet. Die Ladeplattform 10 bildet eine Aufnahmefläche für zumindest ein Stückgut 13 aus. Ein solches Einebenenregalbediengerät 3' und eine solche Lastaufnahmevorrichtung 11 sind beispielweise in der WO 2013/090970 A2 oder EP 2 351 698 B1 offenbart und sind Gegenstand dieser Offenbarung.

Die Lastaufnahmevorrichtung 11 umfasst Teleskoparme, welche auf beziehungsweise an der Ladeplattform 10 angeordnet sind und jeweils senkrecht zur Regalgasse 6 ein/ausfahrbare Schlitten umfassen. Der äußere Schlitten der Teleskoparme umfasst an seinen gegenüberliegenden Enden und dazwischen angeordnete und relativ zur Ladeplattform 10 verstellbare Transportorgane, mittels welcher ein einzulagerndes oder auszulagerndes Stückgut 15 hintergriffen werden kann.

Auch wenn die gezeigte Ausführung in jeder Ebene ein Einebenenregalbediengerät 3' umfasst, ist es genauso gut möglich, dass nur einige der Ebenen ein Einebenenregalbediengerät 3' umfassen. In diesem Fall ist eine Hebevorrichtung für Einebenenregalbediengeräte 3' vorgesehen, welche ein Einebenenregalbediengerät 3' von einer Ebene übernehmen und auf eine andere Ebene umsetzen kann. Eine solche Hebevorrichtung ist beispielweise in der WO 2012/106744 A1 beschrieben.

Zusätzlich ist der Regalreihe 5 ein Lift 15 vorgelagert, welcher einen Mast 16 und eine daran verfahrbare Ladeplattform 17 aufweist. Beim Einlagervorgang wird ein einzulagerndes Stückgut 13 von der Ladeplattform 17 auf eine Bereitstellvorrichtung 18 abgegeben. Dieses Stückgut 13 verbleibt so lange auf der Bereitstellvorrichtung 18 bis das Einebenenregalbediengerät 3' das Stückgut 13 abholt. Das Einebenenregalbediengerät 3' übernimmt das Stückgut 13 und fördert es zu seinem Lagerplatz 2. Beim Auslagern erfolgt der dazu umgekehrte Vorgang. Die Kombination der Einebenenregalbediengeräte 3' und des Lifts 15 erfüllen dabei im Wesentlichen dieselbe Funktion wie ein Mehrebenenregalbediengerät 3a, 3a'. Der Lift 15 kann insbesondere auch in Form eines Paternosters vorgesehen sein.

Über Stromleitungen 12 ist die Stromversorgung 4 elektrisch mit den Schienen 8 respektive mit den Einebenenregalbediengeräten 3' je Ebene verbunden, sodass elektrische Antriebsmotoren derselben mit elektrischer Energie versorgt werden können. Ein erster Antriebsmotor (Fahrantrieb) dient der Fahrbewegung eines Einebenenregalbediengeräts 3' entlang der Regalgasse 6, ein zweiter Antriebsmotor (Ein- und Auslagerantrieb) dient der Ein- und Ausfahrbewegung der Lastaufnahmevorrichtung 11. Die Lastaufnahmevorrichtung 11 wiederum kann zumindest einen dritten Antriebsmotor umfassen, welcher der Verstellbewegung eines Transportorgans zum Transport von Stückgütern 13 zwischen dem Lagerplatz 2 und der Ladeplattform 10 dient.

Selbstverständlich kann die Stromübertragung auch anders erfolgen, beispielsweise über eine Schleifleitung, wie dies beispielweise in der WO 2013/090970 A2 beschrieben ist. In dem gezeigten Beispiel ist die Stromversorgung 4 allen Einebenenregalbediengeräten 3' zugeordnet.

Das zur Fig. 1 Gesagte gilt nun sinngemäß auch für die Ausführungsform nach Fig. 2, wobei die Stromversorgung 4 und der Energiespeicher C Regalbediengeräten 3' mehrerer Ebenen einer Regalgasse 6 zugeordnet sind. Zusätzlich können die Stromversorgung 4 und der Energiespeicher C auch dem Lift 15 zugeordnet sein und dessen generatorisch erzeugte Energie verwerten.

Fig. 3 zeigt nun eine Ausführungsform, bei der eine erste Stromversorgung 4 einer ersten Fahrebene zugeordnet ist, eine zweite Stromversorgung 4' einer zweiten Fahrebene und eine dritte Stromversorgung 4" einer dritten und vierten Fahrebene. Die Einebenenregalbediengeräte 3' werden also teilweise von unterschiedlichen Stromversorgungen 4..4" mit elektrischer Energie versorgt. Hierbei weisen die Stromversorgungen 4..4" jeweils einen Energiespeicher C auf. Die beim Bremsen eines Einebenenregalbediengeräts 3' generatorisch erzeugte elektrische Energie wird im Energiespeicher C der zugeordneten Stromversorgung 4..4"gespeichert und zu einem späteren Zeitpunkt für das Beschleunigen dieses oder eines anderen Einebenenregalbediengeräts 3' herangezogen.

Diese Ausführung erweist sich insbesondere bei großen Regallagersystemen 1c von Vorteil, da im Störfall an einer Stromversorgung 4..4" und/oder einem Energiespeicher C nur jenes Einebenenregalbediengerät 3' oder jene Gruppe von Einebenenregalbediengeräten 3' stillgesetzt werden muss, welche(s) der betreffenden Stromversorgung 4..4" und/oder dem betreffenden Energiespeicher C zugeordnet ist. Die anderen Einebenenregalbediengeräte 3' oder die andere(n) Gruppe(n) von Einebenenregalbediengeräten 3' können weiterhin normal betrieben werden. Dadurch wird eine hohe Anlagenverfügbarkeit des Regallagersystems 1c erreicht.

Das zur Fig. 1 Gesagte gilt sinngemäß auch für die Ausführungsform nach Fig. 3. Zusätzlich kann eine Stromversorgung 4..4" und ein Energiespeicher C auch hier dem Lift 17 zugeordnet sein und dessen generatorisch erzeugte Energie verwerten.

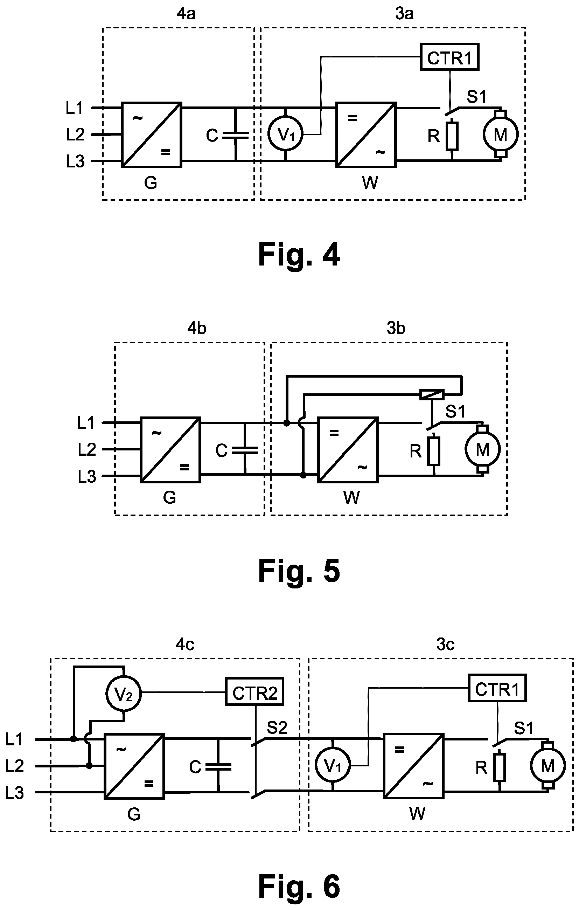

Die Fig. 4 bis 8 zeigen nun elektrische Schaltbilder möglicher Ausführungsformen für die Versorgung von Regalbediengeräten 3a..3e mit elektrischer Energie mit Hilfe von Stromversorgungen 4a..4e.

Konkret umfasst die Ausführungsform nach Fig. 4 eine Stromversorgung 4a und ein damit elektrisch verbundenes Regalbediengerät 3a. Das Regalbediengerät 3a weist einen Antriebsmotor M auf, einen Wechselrichter W, einen Bremswiderstand R, ein Antriebsmotor-Schaltelement S1, eine erste Steuerung CTR1 sowie ein Gerät zur Messung einer ersten Versorgungsspannung V₁ für den Wechselrichter W. Die Stromversorgung 4a weist eine Versorgungsschaltung G auf, welche in dem vorliegenden Beispiel als Gleichrichter ausgebildet ist, und einen damit elektrisch verbundenen Energiespeicher C. Der Gleichrichter G weist darüber hinaus drei Anschlüsse an ein elektrisches Versorgungsnetz L1..L3 auf. Mit dem Antriebsmotor-Schaltelement S1 ist der Antriebsmotor M wahlweise mit dem Bremswiderstand R oder dem Wechselrichter W verbindbar. Ein zwischen der Stromversorgung 4a und dem Regalbediengerät 3a liegendes Verbindungsstück zur Bereitstellung einer elektrischen Verbindung zwischen der Stromversorgung 4a und dem Regalbediengerät 3a kann beispielsweise die Schienen 8 und/oder die Verkabelung 12 umfassen.

Beim Beschleunigen und zur Erhaltung einer Bewegung bezieht das Regalbediengerät 3a über den Wechselrichter W und den Gleichrichter G elektrische Energie aus dem elektrischen Versorgungsnetz L1..L3. Eine im elektrischen Versorgungsnetz L1..L3 vorliegende dreiphasige Wechselspannung wird mit Hilfe des Gleichrichters G in eine Gleichspannung umgewandelt, welche mittels des Energiespeichers C geglättet und dem Wechselrichter W zugeführt wird. Der Wechselrichter W wandelt die Gleichspannung wieder in eine Wechselspannung um, mit welcher der Antriebsmotor M angetrieben wird. Das Antriebsmotor-Schaltelement S1 befindet sich dabei in einer Stellung, in welcher der Antriebsmotor M mit dem Wechselrichter W verbunden ist.

Beim Verzögern des Regalbediengeräts 3a sind zwei Fälle zu unterscheiden: Eine beim Verzögern des Regalbediengeräts 3a anfallende elektrische Energie
wird in den Energiespeicher C rückgespeist, wenn eine Versorgungsspannung V₁ für den Wechselrichter W über einem ersten Versorgungsspannungs-Schwellwert liegt, und
wird in den Bremswiderstand R geleitet, wenn die Versorgungsspannung V₁ für den Wechselrichter W unter dem ersten Versorgungsspannungs-Schwellwert oder unter einem niedrigeren zweiten Versorgungsspannungs-Schwellwert liegt.

Zu diesem Zweck wird die Versorgungsspannung V₁ am Eingang des Wechselrichters W bei dieser Ausführungsform gemessen und von der ersten Steuerung CTR1 ausgewertet. Die erste Steuerung CTR1 steuert das Antriebsmotor-Schaltelement S1 so an, dass es
den Antriebsmotor M mit dem Wechselrichter W verbindet, wenn die Versorgungsspannung V₁ für den Wechselrichter W über dem ersten Versorgungsspannungs-Schwellwert liegt, und
den Antriebsmotor M mit dem Bremswiderstand R verbindet, wenn die Versorgungsspannung V₁ für den Wechselrichter W unter dem ersten Versorgungsspannungs-Schwellwert oder unter dem niedrigeren zweiten Versorgungsspannungs-Schwellwert liegt.

Das Antriebsmotor-Schaltelement S1 kann als elektronisches Schaltelement ausgebildet sein, zum Beispiel als Transistor, oder als elektromechanisches Schaltelement, beispielsweise als Relais. Die erste Steuerung CTR1 kann für die Ansteuerung des Antriebsmotor-Schaltelements S1 mit einem Steuereingang des Antriebsmotor-Schaltelements S1 verbunden sein, also zum Beispiel mit einem Gate-Anschluss oder Basis-Anschluss eines Transistors oder mit einer Steuerspule eines Relais.

Der erste Versorgungsspannungs-Schwellwert und gegebenenfalls der zweite Versorgungsspannungs-Schwellwert werden so gewählt, dass der Wechselrichter W und dessen Steuerung sowie die erste Steuerung CTR1 wenigstens bis zum Umschalten des Antriebsmotors M auf den Bremswiderstand R ausreichend mit elektrischer Energie versorgt werden und funktionstüchtig bleiben. Spätestens wenn die hinreichende Versorgung des Wechselrichters W und dessen Steuerung sowie der ersten Steuerung CTR1 nicht mehr gegeben ist, wird der Antriebsmotor M auf den Bremswiderstand R umgeschaltet. Der Schaltzustand des Antriebsmotor-Schaltelements S1 sollte dabei auch bei weiter sinkender Spannung beibehalten werden. Durch diese Maßnahmen wird gewährleistet, dass das Regalbediengerät 3a auch dann elektrisch gebremst werden kann, wenn die beim Verzögern anfallende elektrische Energie nicht in den Energiespeicher C rückgespeist werden kann, beispielsweise weil eine Störung im elektrischen Netz vorliegt und der Wechselrichter W und dessen Steuerung nicht mehr ausreichend versorgt werden und daher ausfallen.

Eine mechanische Bremse, insbesondere eine selbsthaltende mechanische Bremse, kann entfallen. Vorteilhaft ist dabei insbesondere, dass das Regalbediengerät 3a nach dem Anhalten ohne weitere Maßnahmen leicht per Hand verschoben werden kann, da die Bremse über den Bremswiderstand R im Stillstand oder bei langsamer Fahrt keine oder nur eine vernachlässigbare Wirkung hat.

Um die Ansteuerung des Antriebsmotor-Schaltelements S1 zu vereinfachen und um die Betriebssicherheit des Regallagersystems 1a..1c zu erhöhen, kann auch eine Anordnung nach Fig. 5 vorgesehen sein. Die Stromversorgung 4b der Fig. 5 gleicht dabei der Stromversorgung 4a der Fig. 4, und das Regalbediengerät 3b der Fig. 5 ist dem Regalbediengerät 3a der Fig. 4 ähnlich. Bei dieser Ausführungsform umfasst das Antriebsmotor-Schaltelement S1 des Regalbediengeräts 3b ein Antriebsmotor-Relais oder ist als solches ausgebildet und weist demzufolge einen Schaltkontakt und eine auf den Schaltkontakt wirkende Steuerspule auf. Die Steuerspule ist dabei in einem zwischen dem Schaltkontakt des Relais und dem Energiespeicher C liegenden Strompfad angeordnet, insbesondere in einem zwischen dem Wechselrichter W und dem Energiespeicher C liegenden Strompfad, so wie das in der Fig. 5 der Fall ist.

Bei dieser Ausführungsform verbindet der Schaltkontakt des Antriebsmotor-Relais
den Antriebsmotor M mit dem Wechselrichter W, wenn die Steuerspule des Antriebsmotor-Relais mit einer über einer Einschaltspannung des Antriebsmotor-Relais liegenden Spannung versorgt wird und das Antriebsmotor-Relais angezogen ist, und
den Antriebsmotor M mit dem Bremswiderstand R, wenn die Spannung an der Steuerspule unterhalb einer Ausschaltspannung des Antriebsmotor-Relais liegt und das Antriebsmotor-Relais abgefallen ist.

Bei dieser Ausführungsform kann eine gesonderte Steuerung CTR1 für das Antriebsmotor-Schaltelement S1 also entfallen, da die Umschaltung des Antriebsmotors M zwischen dem Energiespeicher C und dem Bremswiderstand R direkt von der Steuerspule des Antriebsmotor-Relais übernommen wird. Diese Ausführungsform ist daher besonders einfach aufgebaut und besonders betriebssicher.

Fig. 6 zeigt eine weitere Ausführungsform mit einem Regalbediengerät 3c und einer Stromversorgung 4c, die der in Fig. 4 dargestellten Ausführungsform sehr ähnlich ist. Im Unterschied dazu ist ein steuerbares Energiespeicher-Schaltelement S2 zwischen dem Energiespeicher C und dem Wechselrichter W vorgesehen. Darüber hinaus umfasst die Stromversorgung 4c ein eine zweite Steuerung CTR2 sowie ein Gerät zur Messung der Netzspannung V₂ des elektrischen Versorgungsnetzes L1..L3.

Die zweite Steuerung CTR2 für das steuerbare Energiespeicher-Schaltelement S2 kann dazu ausgebildet sein, die Netzspannung V₂ des elektrischen Versorgungsnetzes L1..L3 und/oder den Status einer elektrischen Verbindung zwischen dem Energiespeicher C und dem elektrischen Versorgungsnetz L1..L3 zu erfassen. Die zweite Steuerung CTR2 steuert das Energiespeicher-Schaltelement S2 so an, dass es
den Wechselrichter W mit dem Energiespeicher C verbindet, wenn eine Netzspannung V₂ des elektrischen Versorgungsnetzes L1..L3 über einem ersten Netzspannungs-Schwellwert liegt und/oder wenn der Energiespeicher C elektrisch mit dem elektrischen Versorgungsnetz L1..L3 verbunden ist, und
den Wechselrichter W vom Energiespeicher C trennt, wenn die Netzspannung V₂ des elektrischen Versorgungsnetzes L1..L3 unter dem ersten Netzspannungs-Schwellwert oder unter einem niedrigeren zweiten Netzspannungs-Schwellwert liegt und/oder wenn der Energiespeicher C vom elektrischen Versorgungsnetz L1..L3 elektrisch getrennt ist.

Das Energiespeicher-Schaltelement S2 kann wiederum als elektronisches Schaltelement ausgebildet sein, zum Beispiel als Transistor, oder als elektromechanisches Schaltelement, beispielsweise als Relais. Die zweite Steuerung CTR2 ist mit einem Steuereingang des Energiespeicher-Schaltelements S2 verbunden, also zum Beispiel mit einem Gate-Anschluss oder Basis-Anschluss eines Transistors oder mit einer Steuerspule eines Relais.

Mit Hilfe des Energiespeicher-Schaltelements S2 können das Regalbediengerät 3c und die Schienen 8 spannungslos geschaltet werden. Dies kann aktiv durch einen Benutzer erfolgen, der zum Beispiel die Regalgasse 6 betreten oder das Regalbediengerät 3c warten möchte, oder eben aufgrund des Zustandes des Versorgungsnetzes L1..L3. Fällt dieses aus, so könnten Personen, die keine genaue Kenntnis über den elektrischen Aufbau des Regallagersystems 1a..1c haben, von der irrigieren Annahme ausgehen, dass das Regalbediengerät 3c und die Schienen 8 bei Ausfall des Versorgungsnetzes L1..L3 spannungslos sind. Dies ist aber wegen des Energiespeichers C, welcher auch bei Ausfall des Versorgungsnetzes L1..L3 mit einer lebensgefährlichen Spannung geladen sein kann, nicht zwingend der Fall. Auch könnte sich das Regalbediengerät 3c mit der Energie aus dem Energiespeicher C aktiv und gegebenenfalls unkontrolliert bewegen. Aus Sicherheitsgründen wird der Energiespeicher C daher bei Ausfall des Versorgungsnetzes L1..L3 vom Regalbediengerät 3c und den Schienen 8 weggeschaltet, sodass der Zutritt zur Regalgasse 6 ungefährlich ist.

Der Zustand des Versorgungsnetzes L1..L3 kann durch Messung der zweiten Netzspannung V₂ ermittelt werden oder aber auch durch Empfang einer Meldung einer anderen Einheit, welche den Zustand des Versorgungsnetzes L1..L3 überwacht. Beispielsweise könnte eine zentrale Überwachungseinheit am Netzzugangspunkt des Regallagersystems 1a..1c eine entsprechende Meldung absetzen, wenn es eine Fehlfunktion des Versorgungsnetzes L1..L3 registriert.

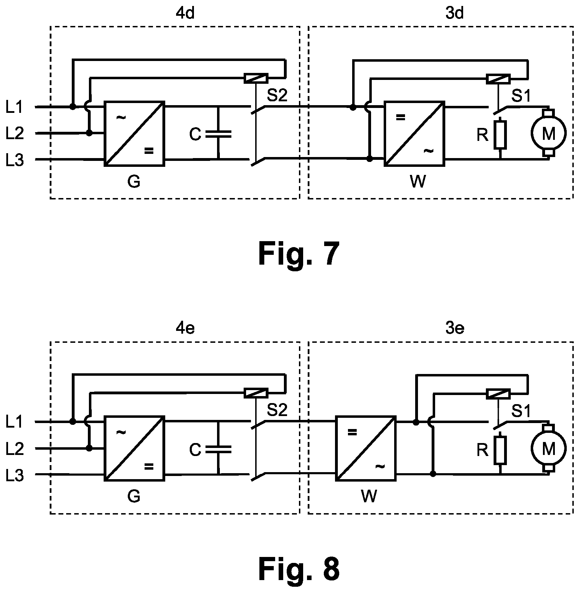

Um die Ansteuerung des Energiespeicher-Schaltelements S2 zu vereinfachen und um die Betriebssicherheit des Regallagersystems 1a..1c zu erhöhen, kann auch eine Anordnung nach Fig. 7 mit einem Regalbediengerät 3d vorgesehen sein, welches dem Regalbediengerät 3b aus Fig. 5 gleicht, und einer Stromversorgung 4d, die jener der Fig. 6 sehr ähnlich ist. Bei dieser Ausführungsform umfasst das Energiespeicher-Schaltelement S2 ein Energiespeicher-Relais oder ist als solches ausgebildet und weist demzufolge einen Schaltkontakt und eine auf den Schaltkontakt wirkende Steuerspule auf. Die Steuerspule ist in einem zwischen dem Energiespeicher C und dem elektrischen Versorgungsnetz L1..L3 liegenden Strompfad angeordnet.

Bei dieser Ausführungsform verbindet der Schaltkontakt des Energiespeicher-Relais
den Wechselrichter W mit dem Energiespeicher C, wenn eine auf den Schaltkontakt wirkende Steuerspule des Energiespeicher-Relais, welche in einem zwischen dem Energiespeicher C und dem elektrischen Versorgungsnetz L1..L3 liegenden Strompfad angeordnet ist, mit einer über einer Schaltspannung des Energiespeicher-Relais liegenden Spannung versorgt wird und das Energiespeicher-Relais angezogen ist, und
trennt den Wechselrichter W vom Energiespeicher C, wenn die Spannung an der Steuerspule unterhalb der Schaltspannung des Energiespeicher-Relais liegt und das Energiespeicher-Relais abgefallen ist.

Bei dieser Ausführungsform kann eine gesonderte Steuerung für das Energiespeicher-Schaltelement S2 entfallen, da das Verbinden des Energiespeichers C mit dem Wechselrichter W und das Trennen des Energiespeichers C vom Wechselrichter W direkt von der Steuerspule des Energiespeicher-Relais übernommen wird. Diese Ausführungsform ist daher ebenfalls besonders einfach aufgebaut und besonders betriebssicher.

Fig. 8 zeigt schließlich eine der Fig. 7 ähnliche Ausführungsform. Im Unterschied dazu wird die Steuerspule des Antriebsmotor-Schaltelements S1 in den zwischen dem Wechselrichter W und dem Bremswiderstand R liegenden Teil des Stromkreises geschaltet. Die Steuerspule wird demzufolge mit einer Wechselspannung und nicht wie in Fig. 7 mit einer Gleichspannung betrieben. Die übrige Funktionsweise ist hingegen gleich. Das in Fig. 8 darstellte Regalbediengerät 3e ist darüber hinaus auch bei der in der Fig. 5 dargestellte Anordnung anwendbar. An dieser Stelle wird auch angemerkt, dass die an der Steuerspule anliegende Spannung von der Versorgungsspannung V₁ für den Wechselrichter W beeinflusst wird beziehungsweise von dieser abhängt.

In den bisher genannten Beispielen wurde die Versorgungsspannung V₁ für den Wechselrichter W als Parameter dafür herangezogen, wohin eine beim Verzögern des Regalbediengeräts 3, 3', 3a..3e anfallende elektrische Energie geleitet wird. Diese Vorgangsweise ist aber nicht zwingend. Denkbar ist auch, dass hierfür geprüft wird, ob der Wechselrichter W elektrisch mit dem Energiespeicher C verbunden ist oder nicht. Beispielsweise kann zu diesem Zweck der Schaltzustand des Energiespeicher-Schaltelements S2 oder auch der Zustand des Versorgungsnetzes L1..L3, beispielsweise am Netzzugangspunkt des Regallagersystems 1a..1c, ausgewertet werden.

Eine beim Verzögern des Regalbediengeräts 3, 3', 3a..3e anfallende elektrische Energie kann also auch
in den Energiespeicher C rückgespeist werden, wenn der Wechselrichter W elektrisch mit dem Energiespeicher C verbunden ist, und
in einen Bremswiderstand R geleitet werden, wenn der Wechselrichter W vom Energiespeicher C elektrisch getrennt ist.

Insbesondere kann das steuerbare Antriebsmotor-Schaltelement S1
den Antriebsmotor M mit dem Wechselrichter W verbinden, wenn der Wechselrichter W elektrisch mit dem Energiespeicher C verbunden ist, und
den Antriebsmotor M mit dem Bremswiderstand R verbinden, wenn der Wechselrichter W vom Energiespeicher C elektrisch getrennt ist.

Es ergibt sich somit eine Schalt-Kaskade. Trennt das Energiespeicher-Schaltelement S2 den Energiespeicher C vom Wechselrichter W, dann wird in der Folge auch der Antriebsmotor M vom Wechselrichter W getrennt und stattdessen mit dem Bremswiderstand R verbunden.

In den Fig. 4 bis 8 ist der Energiespeicher C als stationärer Energiespeicher C ausgebildet und mit jeweils einem Wechselrichter W verbunden. Der Energiespeicher C könnte aber auch elektrisch mit Wechselrichtern W mehrerer Regalbediengeräte 3, 3', 3a..3e verbunden sein (vergleiche auch die Fig. 1 bis 3).

Der in den Fig. 4 bis 8 dargestellte Antriebsmotor M ist hinsichtlich seiner Funktion nicht eingeschränkt und könnte somit der Fahrbewegung des Regalbediengeräts 3, 3', 3a..3e dienen, der Heb- und Senkbewegung der Ladeplattform 10 oder auch der Ein- und Ausfahrbewegung der Lastaufnahmevorrichtung 11. Der Antriebsmotor M kann auch stellvertretend für mehrere oder alle Antriebe des Regalbediengeräts 3, 3', 3a..3e stehen.

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1a..1c: Regallagersystem
- 2: Lagerplatz
- 3, 3', 3a..3e: Regalbediengerät
- 4..4", 4a..4e: Stromversorgung
- 5: Regalreihe

- 6: Regalgasse
- 7: Fahrgestell
- 8: Schiene
- 9: Mast
- 10: Ladeplattform

- 11: Lastaufnahmevorrichtung
- 12: Verkabelung
- 13: Stückgut
- 14: Fahrgestell
- 15: Lift

- 16: Mast
- 17: Ladeplattform
- 18: Bereitstellvorrichtung

- C: Energiespeicher
- CTR1, CTR2: Steuerung
- G: Versorgungsschaltung
- L1..L3: Versorgungsnetz
- M: Antriebsmotor

- R: Bremswiderstand
- S1: Antriebsmotor-Schaltelement
- S2: Energiespeicher-Schaltelement
- V1: Versorgungsspannung für den Wechselrichter
- V2: Netzspannung des elektrischen Versorgungsnetzes
- W: Wechselrichter

## Patentansprüche

1. Verfahren zum Betrieb eines Regalbediengeräts (3, 3', 3a..3e), wobei
das Regalbediengerät (3, 3', 3a..3e) einen Wechselrichter (W) und einen damit verbindbaren Antriebsmotor (M) für das Regalbediengerät (3, 3', 3a..3e) aufweist, und wobei
der Wechselrichter (W) zumindest zeitweise elektrisch mit einem Energiespeicher (C) verbunden ist, welcher über eine Versorgungsschaltung (G) mit einem elektrischen Versorgungsnetz (L1..L3) verbunden ist,
**dadurch gekennzeichnet, dass**
eine beim Verzögern des Regalbediengeräts (3, 3', 3a..3e) anfallende elektrische Energie
in den Energiespeicher (C) rückgespeist wird, wenn eine Versorgungsspannung (V₁) für den Wechselrichter (W) über einem ersten Versorgungsspannungs-Schwellwert liegt, und
in einen Bremswiderstand (R) geleitet wird, wenn die Versorgungsspannung (V₁) für den Wechselrichter (W) unter dem ersten Versorgungsspannungs-Schwellwert oder unter einem niedrigeren zweiten Versorgungsspannungs-Schwellwert liegt.

2. Verfahren nach Anspruch 1, **dadurch gekennzeichnet, dass** ein steuerbares Antriebsmotor-Schaltelement (S1)
den Antriebsmotor (M) mit dem Wechselrichter (W) verbindet, wenn die Versorgungsspannung (V₁) für den Wechselrichter (W) über dem ersten Versorgungsspannungs-Schwellwert liegt, und
den Antriebsmotor (M) mit dem Bremswiderstand (R) verbindet, wenn die Versorgungsspannung (V₁) für den Wechselrichter (W) unter dem ersten Versorgungsspannungs-Schwellwert oder unter dem niedrigeren zweiten Versorgungsspannungs-Schwellwert liegt.

3. Verfahren nach Anspruch 2, **dadurch gekennzeichnet, dass** das Antriebsmotor-Schaltelement (S1) ein Antriebsmotor-Relais umfasst oder als solches ausgebildet ist und ein Schaltkontakt des Antriebsmotor-Relais
den Antriebsmotor (M) mit dem Wechselrichter (W) verbindet, wenn eine auf den Schaltkontakt wirkende Steuerspule des Antriebsmotor-Relais, welche in einem zwischen dem Schaltkontakt und dem Energiespeicher (C) liegenden Strompfad angeordnet ist, mit einer über einer Einschaltspannung des Antriebsmotor-Relais liegenden Spannung versorgt wird und das Antriebsmotor-Relais angezogen ist, und
den Antriebsmotor (M) mit dem Bremswiderstand (R) verbindet, wenn die Spannung an der Steuerspule unterhalb einer Ausschaltspannung des Antriebsmotor-Relais liegt und das Antriebsmotor-Relais abgefallen ist.

4. Verfahren nach einem der Ansprüche 1 bis 3, **dadurch gekennzeichnet, dass** ein steuerbares Energiespeicher-Schaltelement (S2)
den Wechselrichter (W) mit dem Energiespeicher (C) verbindet, wenn eine Netzspannung (V₂) des elektrischen Versorgungsnetzes (L1..L3) über einem ersten Netzspannungs-Schwellwert liegt und/oder wenn der Energiespeicher (C) elektrisch mit dem elektrischen Versorgungsnetz (L1..L3) verbunden ist, und
den Wechselrichter (W) vom Energiespeicher (C) trennt, wenn die Netzspannung (V₂) des elektrischen Versorgungsnetzes (L1..L3) unter dem ersten Netzspannungs-Schwellwert oder unter einem niedrigeren zweiten Netzspannungs-Schwellwert liegt und/oder wenn der Energiespeicher (C) vom elektrischen Versorgungsnetz (L1..L3) elektrisch getrennt ist.

5. Verfahren zum Betrieb eines Regalbediengeräts (3, 3', 3a..3e), wobei
das Regalbediengerät (3, 3', 3a..3e) einen Wechselrichter (W) und einen damit verbindbaren Antriebsmotor (M) für das Regalbediengerät (3, 3', 3a..3e) aufweist, und wobei
der Wechselrichter (W) zumindest zeitweise elektrisch mit einem Energiespeicher (C) verbunden ist, welcher über eine Versorgungsschaltung (G) mit einem elektrischen Versorgungsnetz (L1..L3) verbunden ist,
**dadurch gekennzeichnet, dass**
eine beim Verzögern des Regalbediengeräts (3, 3', 3a..3e) anfallende elektrische Energie
in den Energiespeicher (C) rückgespeist wird, wenn der Wechselrichter (W) elektrisch mit dem Energiespeicher (C) verbunden ist, und
in einen Bremswiderstand (R) geleitet wird, wenn der Wechselrichter (W) vom Energiespeicher (C) elektrisch getrennt ist,
und
ein steuerbares Energiespeicher-Schaltelement (S2) vorgesehen ist, das
den Wechselrichter (W) mit dem Energiespeicher (C) verbindet, wenn eine Netzspannung (V₂) des elektrischen Versorgungsnetzes (L1..L3) über einem ersten Netzspannungs-Schwellwert liegt und/oder wenn der Energiespeicher (C) elektrisch mit dem elektrischen Versorgungsnetz (L1..L3) verbunden ist, und
den Wechselrichter (W) vom Energiespeicher (C) trennt, wenn die Netzspannung (V₂) des elektrischen Versorgungsnetzes (L1..L3) unter dem ersten Netzspannungs-Schwellwert oder unter einem niedrigeren zweiten Netzspannungs-Schwellwert liegt und/oder wenn der Energiespeicher (C) vom elektrischen Versorgungsnetz (L1..L3) elektrisch getrennt ist,
wobei für die Prüfung, ob der Wechselrichter (W) elektrisch mit dem Energiespeicher (C) verbunden ist oder nicht, ein Schaltzustand des Energiespeicher-Schaltelements (S2) oder ein Zustand des elektrischen Versorgungsnetzes (L1..L3) ausgewertet werden.

6. Verfahren nach Anspruch 4 oder 5, **dadurch gekennzeichnet, dass** das Energiespeicher-Schaltelement (S2) ein Energiespeicher-Relais umfasst oder als solches ausgebildet ist und ein Schaltkontakt des Energiespeicher-Relais
den Wechselrichter (W) mit dem Energiespeicher (C) verbindet, wenn eine auf den Schaltkontakt wirkende Steuerspule des Energiespeicher-Relais, welche in einem zwischen dem Energiespeicher (C) und dem elektrischen Versorgungsnetz (L1..L3) liegenden Strompfad angeordnet ist, mit einer über einer Schaltspannung des Energiespeicher-Relais liegenden Spannung versorgt wird und das Energiespeicher-Relais angezogen ist, und
den Wechselrichter (W) vom Energiespeicher (C) trennt, wenn die Spannung an der Steuerspule unterhalb der Schaltspannung des Energiespeicher-Relais liegt und das Energiespeicher-Relais abgefallen ist.

7. Regallagersystem (1a..1c), umfassend
ein Regalbediengerät (3, 3', 3a..3e), welches einen Wechselrichter (W) und einen damit verbindbaren Antriebsmotor (M) für das Regalbediengerät (3, 3', 3a..3e) aufweist,
einen Energiespeicher (C), welcher zumindest zeitweise elektrisch mit dem Wechselrichter (W) verbunden ist, und
eine Versorgungsschaltung (G), welche mit einem elektrischen Versorgungsnetz (L1..L3) und mit dem Energiespeicher (C) verbunden ist,
**gekennzeichnet durch**
ein Antriebsmotor-Schaltelement (S1), welches dazu ausgebildet ist,
den Antriebsmotor (M) mit dem Wechselrichter (W) zu verbinden, wenn eine Versorgungsspannung (V₁) für den Wechselrichter (W) über einem ersten Versorgungsspannungs-Schwellwert liegt, und
den Antriebsmotor (M) mit dem Bremswiderstand (R) zu verbinden, wenn die Versorgungsspannung (V₁) für den Wechselrichter (W) unter dem ersten Versorgungsspannungs-Schwellwert oder unter einem niedrigeren zweiten Versorgungsspannungs-Schwellwert liegt.

8. Regallagersystem (1a..1c) nach Anspruch 7, **dadurch gekennzeichnet, dass** der Energiespeicher (C) als stationärer Energiespeicher (C) ausgebildet ist und insbesondere elektrisch mit Wechselrichtern (W) mehrerer Regalbediengeräte (3, 3', 3a..3e) verbunden ist.

9. Regallagersystem (1a..1c) nach Anspruch 7 oder 8, **dadurch gekennzeichnet, dass** das Antriebsmotor-Schaltelement (S1) ein Antriebsmotor-Relais umfasst oder als solches ausgebildet ist und der Antriebsmotor (M) über einen Schaltkontakt des Antriebsmotor-Relais mit dem Wechselrichter (W) oder dem Bremswiderstand (R) verbindbar ist und eine auf den Schaltkontakt wirkende Steuerspule des Antriebsmotor-Relais in einem zwischen dem Schaltkontakt und dem Energiespeicher (C) liegenden Strompfad angeordnet ist.

10. Regallagersystem (1a..1c) nach einem der Ansprüche 7 bis 9, **gekennzeichnet durch** ein steuerbares Energiespeicher-Schaltelement (S2), welches dazu ausgebildet ist,
den Wechselrichter (W) mit dem Energiespeicher (C) zu verbinden, wenn eine Netzspannung (V₂) des elektrischen Versorgungsnetzes (L1..L3) über einem ersten Netzspannungs-Schwellwert liegt und/oder wenn der Energiespeicher (C) elektrisch mit dem elektrischen Versorgungsnetz (L1..L3) verbunden ist, und
den Wechselrichter (W) vom Energiespeicher (C) zu trennen, wenn die Netzspannung (V₂) des elektrischen Versorgungsnetzes (L1..L3) unter dem ersten Netzspannungs-Schwellwert oder unter einem niedrigeren zweiten Netzspannungs-Schwellwert liegt und/oder wenn der Energiespeicher (C) vom elektrischen Versorgungsnetz (L1..L3) elektrisch getrennt ist.

11. Regallagersystem (1a..1c), umfassend
ein Regalbediengerät (3, 3', 3a..3e), welches einen Wechselrichter (W) und einen damit verbindbaren Antriebsmotor (M) für das Regalbediengerät (3, 3', 3a..3e) aufweist,
einen Energiespeicher (C), welcher zumindest zeitweise elektrisch mit dem Wechselrichter (W) verbunden ist, und
eine Versorgungsschaltung (G), welche mit einem elektrischen Versorgungsnetz (L1..L3) und mit dem Energiespeicher (C) verbunden ist,
**gekennzeichnet durch**
ein Antriebsmotor-Schaltelement (S1), welches dazu ausgebildet ist,
den Antriebsmotor (M) mit dem Wechselrichter (W) zu verbinden, wenn der Wechselrichter (W) elektrisch mit dem Energiespeicher (C) verbunden ist, und
den Antriebsmotor (M) mit dem Bremswiderstand (R) zu verbinden, wenn der Wechselrichter (W) vom Energiespeicher (C) elektrisch getrennt ist,
und
ein steuerbares Energiespeicher-Schaltelement (S2), welches dazu ausgebildet ist,
den Wechselrichter (W) mit dem Energiespeicher (C) zu verbinden, wenn eine Netzspannung (V₂) des elektrischen Versorgungsnetzes (L1..L3) über einem ersten Netzspannungs-Schwellwert liegt und/oder wenn der Energiespeicher (C) elektrisch mit dem elektrischen Versorgungsnetz (L1..L3) verbunden ist, und
den Wechselrichter (W) vom Energiespeicher (C) zu trennen, wenn die Netzspannung (V₂) des elektrischen Versorgungsnetzes (L1..L3) unter dem ersten Netzspannungs-Schwellwert oder unter einem niedrigeren zweiten Netzspannungs-Schwellwert liegt und/oder wenn der Energiespeicher (C) vom elektrischen Versorgungsnetz (L1..L3) elektrisch getrennt ist,
wobei das Regallagersystem (1a..1c) weiter dazu ausgebildet ist, für die Prüfung, ob der Wechselrichter (W) elektrisch mit dem Energiespeicher (C) verbunden ist oder nicht, einen Schaltzustand des Energiespeicher-Schaltelements (S2) oder einen Zustand des elektrischen Versorgungsnetzes (L1..L3) auszuwerten.

12. Regallagersystem (1a..1c) nach Anspruch 10 oder 11, **dadurch gekennzeichnet, dass** das Energiespeicher-Schaltelement (S2) ein Energiespeicher-Relais umfasst oder als solches ausgebildet ist und der Wechselrichter (W) über einen Schaltkontakt des Energiespeicher-Relais mit dem Energiespeicher (C) verbindbar und von diesem trennbar ist und eine auf den Schaltkontakt wirkende Steuerspule des zweiten Relais in einem zwischen dem Energiespeicher (C) und dem elektrischen Versorgungsnetz (L1..L3) liegenden Strompfad angeordnet ist.

## Claims

1. A method for operating a storage and retrieval unit (3, 3', 3a..3e), wherein
the storage and retrieval unit (3, 3', 3a..3e) comprises an inverter (W) and a drive motor (M) connectable thereto for the storage and retrieval unit (3, 3', 3a..3e), and wherein
the inverter (W) is, at least temporarily, electrically connected to an energy store (C), which is connected to an electrical supply network (L1..L3) via a supply circuit (G),
**characterized in that**
an electrical energy generated during the decelerating of the storage and retrieval unit (3, 3', 3a..3e)
is fed back into the energy store (C) if a supply voltage (V₁) for the inverter (W) is above a first supply voltage threshold value, and
is fed into a braking resistor (R) if the supply voltage (V₁) for the inverter (W) is below the first supply voltage threshold value or below a lower, second supply voltage threshold value.

2. The method according to claim 1, **characterized in that** a controllable drive motor switching element (S1)
connects the drive motor (M) to the inverter (W) if the supply voltage (V₁) for the inverter (W) is above the first supply voltage threshold value, and
connects the drive motor (M) to the braking resistor (R) if the supply voltage (V₁) for the inverter (W) is below the first supply voltage threshold value or below the lower, second supply voltage threshold value.

3. The method according to claim 2, **characterized in that** the drive motor switching element (S1) comprises a drive motor relay, or is configured as drive motor relay, and a switching contact of the drive motor relay
connects the drive motor (M) to the inverter (W) if a control coil of the drive motor relay, which control coil acts on the switching contact and is arranged in a current path located between the switching contact and the energy store (C), is supplied with a voltage above a switch-on voltage of the drive motor relay and the drive motor relay is energized, and
connects the drive motor (M) to the braking resistor (R) if the voltage at the control coil is below a switch-off voltage of the drive motor relay and the drive motor relay is released.

4. The method according to any one of the claims 1 to 3, **characterized in that** a controllable energy store switching element (S2)
connects the inverter (W) to the energy store (C) if a line voltage (V₂) of the electrical supply network (L1..L3) is above a first line voltage threshold value and/or if the energy store (C) is electrically connected to the electrical supply network (L1..L3), and
disconnects the inverter (W) from the energy store (C) if the line voltage (V₂) of the electrical supply network (L1..L3) is below the first line voltage threshold value or below a lower, second line voltage threshold value and/or if the energy store (C) is electrically disconnected from the electrical supply network (L1..L3).

5. A method for operating a storage and retrieval unit (3, 3', 3a..3e), wherein
the storage and retrieval unit (3, 3', 3a..3e) comprises an inverter (W) and a drive motor (M) connectable thereto for the storage and retrieval unit (3, 3', 3a..3e), and wherein
the inverter (W) is, at least temporarily, electrically connected to an energy store (C), which is connected to an electrical supply network (L1..L3) via a supply circuit (G),
**characterized in that**
an electrical energy generated during the decelerating of the storage and retrieval unit (3, 3', 3a..3e)
is fed back into the energy store (C) if the inverter (W) is electrically connected to the energy store (C), and
is fed into a braking resistor (R) if the inverter (W) is electrically disconnected from the energy store (C),
and
a controllable energy store switching element (S2) is provided, which
connects the inverter (W) to the energy store (C) if a line voltage (V₂) of the electrical supply network (L1..L3) is above a first line voltage threshold value and/or if the energy store (C) is electrically connected to the electrical supply network (L1..L3), and
disconnects the inverter (W) from the energy store (C) if the line voltage (V₂) of the electrical supply network (L1..L3) is below the first line voltage threshold value or below a lower, second line voltage threshold value and/or if the energy store (C) is electrically disconnected from the electrical supply network (L1..L3),
wherein, in order to check whether or not the inverter (W) is electrically connected to the energy store (C), a switching state of the energy store switching element (S2) or a status of the electrical supply network (L1..L3) are evaluated.

6. The method according to claim 4 or 5, **characterized in that** the energy store switching element (S2) comprises an energy store relay, or is configured as energy store relay, and a switching contact of the energy store relay
connects the inverter (W) to the energy store (C) if a control coil of the energy store relay, which control coil acts on the switching contact and is arranged in a current path located between the energy store (C) and the electrical supply network (L1..L3), is supplied with a voltage above a switching voltage of the energy store relay and the energy store relay is energized, and
disconnects the inverter (W) from the energy store (C) if the voltage at the control coil is below the switching voltage of the energy store relay and the energy store relay is released.

7. A rack storage system (1a..1c), comprising
a storage and retrieval unit (3, 3', 3a..3e), which comprises an inverter (W) and a drive motor (M) connectable thereto for the storage and retrieval unit (3, 3', 3a..3e),
an energy store (C), which is, at least temporarily, electrically connected to the inverter (W), and
a supply circuit (G), which is connected to an electrical supply network (L1..L3) and to the energy store (C),
**characterized by**
a drive motor switching element (S1), which is configured for
connecting the drive motor (M) to the inverter (W) if a supply voltage (V₁) for the inverter (W) is above a first supply voltage threshold value, and
connecting the drive motor (M) to the braking resistor (R) if the supply voltage (V₁) for the inverter (W) is below the first supply voltage threshold value or below a lower, second supply voltage threshold value.

8. The rack storage system (1a..1c) according to claim 7, **characterized in that** the energy store (C) is configured as a stationary energy store (C) and is, in particular electrically, connected to inverters (W) of multiple storage and retrieval units (3, 3', 3a..3e).

9. The rack storage system (1a..1c) according to claim 7 or 8, **characterized in that** the drive motor switching element (S1) comprises a drive motor relay, or is configured as drive motor relay, and the drive motor (M) is connectable to the inverter (W), or to the braking resistor (R), via a switching contact of the drive motor relay, and a control coil of the drive motor relay, which control coil acts on the switching contact, is arranged in a current path located between the switching contact and the energy store (C).

10. The rack storage system (1a..1c) according to any one of the claims 7 to 9, **characterized by** a controllable energy store switching element (S2), which is configured for
connecting the inverter (W) to the energy store (C) if a line voltage (V₂) of the electrical supply network (L1..L3) is above a first line voltage threshold value and/or if the energy store (C) is electrically connected to the electrical supply network (L1..L3), and
disconnecting the inverter (W) from the energy store (C) if the line voltage (V₂) of the electrical supply network (L1..L3) is below the first line voltage threshold value or below a lower, second line voltage threshold value and/or if the energy store (C) is electrically disconnected from the electrical supply network (L1..L3).

11. A rack storage system (1a..1c), comprising
a storage and retrieval unit (3, 3', 3a..3e), which has an inverter (W) and a drive motor (M) connectable thereto for the storage and retrieval unit (3, 3', 3a..3e),
an energy store (C), which is, at least temporarily, electrically connected to the inverter (W), and
a supply circuit (G), which is connected to an electrical supply network (L1..L3) and to the energy store (C),
**characterized by**
a drive motor switching element (S1), which is configured for
connecting the drive motor (M) to the inverter (W) if the inverter (W) is electrically connected to the energy store (C), and
connecting the drive motor (M) to the braking resistor (R) if the inverter (W) is electrically disconnected from the energy store (C),
and
a controllable energy store switching element (S2), which is configured for
connecting the inverter (W) to the energy store (C) if a line voltage (V₂) of the electrical supply network (L1..L3) is above a first line voltage threshold value and/or if the energy store (C) is electrically connected to the electrical supply network (L1..L3), and
disconnecting the inverter (W) from the energy store (C) if the line voltage (V₂) of the electrical supply network (L1..L3) is below the first line voltage threshold value or below a lower, second line voltage threshold value and/or if the energy store (C) is electrically disconnected from the electrical supply network (L1..L3),
wherein the rack storage system (1a..1c), in order to check whether or not the inverter (W) is electrically connected to the energy store (C), is further configured for evaluating a switching state of the energy store switching element (S2) or a status of the electrical supply network (L1..L3).

12. The rack storage system (1a..1c) according to claim 10 or 11, **characterized in that** the energy store switching element (S2) comprises an energy store relay, or is configured as energy store relay, and the inverter (W) is connectable to, and disconnectable from, the energy store (C) via a switching contact of the energy store relay, and a control coil of the second relay, which control coil acts on the switching contact, is arranged in a current path located between the energy store (C) and the electrical supply network (L1..L3).

## Revendications

1. Procédé pour exploiter un appareil de desserte de rayonnages (3, 3', 3a..3e),
l'appareil de desserte de rayonnages (3, 3', 3a..3e) comportant un onduleur (W) et un moteur d'entraînement (M) pouvant être relié à celui-ci pour l'appareil de desserte de rayonnages (3, 3', 3a..3e), et
l'onduleur (W) étant relié au moins temporairement à un accumulateur d'énergie (C) qui est relié par l'intermédiaire d'un circuit d'alimentation (G) à un réseau d'alimentation électrique (L1..L3), **caractérisé en ce que**
l'énergie électrique produite lors du ralentissement de l'appareil de desserte de rayonnages (3, 3', 3a..3e)
est renvoyée dans l'accumulateur d'énergie (C) lorsqu'une tension d'alimentation (V₁) pour l'onduleur (W) est supérieure à une première valeur-seuil de tension d'alimentation, et
est conduite dans une résistance de freinage (R) lorsque la tension d'alimentation (V₁) pour l'onduleur (W) est inférieure à la première valeur-seuil de tension d'alimentation ou inférieure à une deuxième valeur-seuil de tension d'alimentation plus basse.

2. Procédé selon la revendication 1, **caractérisé en ce qu'**un élément de commutation de moteur d'entraînement commandable (S1)
relie le moteur d'entraînement (M) à l'onduleur (W) lorsque la tension d'alimentation (V₁) pour l'onduleur (W) est supérieure à la première valeur-seuil de tension d'alimentation, et
relie le moteur d'entraînement (M) à la résistance de freinage (R) lorsque la tension d'alimentation (V₁) pour l'onduleur (W) est inférieure à la première valeur-seuil de tension d'alimentation ou inférieure à la deuxième valeur-seuil de tension d'alimentation plus basse.

3. Procédé selon la revendication 2, **caractérisé en ce que** l'élément de commutation du moteur d'entraînement(S1)
comprend un relais de moteur d'entraînement ou est conçu comme tel et un contact de commutation du relais du moteur d'entraînement
relie le moteur d'entraînement (M) à l'onduleur (W) lorsqu'une bobine de commande du relais du moteur d'entraînement agissant sur le contact de commutation, qui est agencée dans un chemin courant situé entre le contact de commutation et l'accumulateur d'énergie (C), est alimentée par une tension supérieure à une tension d'enclenchement du relais du moteur d'entraînement et que le relais du moteur d'entraînement est activé, et
relie le moteur d'entraînement (M) à la résistance de freinage (R) lorsque la tension au niveau de la bobine de commande est inférieure à une tension de coupure du relais du moteur d'entraînement et que le relais du moteur d'entraînement est désactivé.

4. Procédé selon l'une des revendications 1 à 3, **caractérisé en ce**
**qu'**un élément de commutation d'accumulateur d'énergie commandable (S2) relie l'onduleur (W) à l'accumulateur d'énergie (C) lorsqu'une tension de réseau (V₂) du réseau d'alimentation électrique (L1..L3) est supérieure à une première valeur-seuil de tension de réseau et/ou lorsque l'accumulateur d'énergie (C) est relié électriquement au réseau d'alimentation électrique (L1..L3), et
sépare l'onduleur (W) de l'accumulateur d'énergie (C) lorsque la tension de réseau (V₂) du réseau d'alimentation électrique (L1..L3) est inférieure à la première valeur-seuil de tension de réseau ou à une deuxième valeur-seuil de tension de réseau plus basse et/ou lorsque l'accumulateur d'énergie (C) est séparé électriquement du réseau d'alimentation électrique (L1..L3).

5. Procédé pour exploiter un appareil de desserte de rayonnages (3, 3', 3a..3e), l'appareil de desserte de rayonnages (3, 3', 3a..3e) comportant un onduleur (W) et un moteur d'entraînement (M) pouvant être relié à celui-ci pour l'appareil de desserte de rayonnages (3, 3', 3a.. 3e), et l'onduleur (W) étant relié au moins temporairement à un accumulateur d'énergie (C) qui est relié à un réseau d'alimentation électrique (L1..L3) par l'intermédiaire d'un circuit d'alimentation (G),
**caractérisé en ce que**
l'énergie électrique produite lors du ralentissement de l'appareil de desserte de rayonnages (3, 3', 3a..3e) est renvoyée vers l'accumulateur d'énergie (C) lorsque l'onduleur (W) est relié électriquement à l'accumulateur d'énergie (C), et
est conduite vers une résistance de freinage (R) lorsque l'onduleur (W) est électriquement séparé de l'accumulateur d'énergie (C), et
un élément de commutation d'accumulateur d'énergie commandable (S2) est prévu, qui relie l'onduleur (W) à l'accumulateur d'énergie (C) lorsqu'une tension de réseau (V₂) du réseau d'alimentation électrique (L1..L3) est supérieure à une première valeur-seuil de tension de réseau et/ou lorsque l'accumulateur d'énergie (C) est relié électriquement au réseau d'alimentation électrique (L1..L3) et
sépare l'onduleur (W) de l'accumulateur d'énergie (C) lorsque la tension de réseau (V₂) du réseau d'alimentation électrique (L1..L3) est inférieure à la première valeur-seuil de tension de réseau
ou inférieure à une deuxième valeur-seuil de tension de réseau plus basse, et/ou lorsque l'accumulateur d'énergie (C) est séparé électriquement du réseau d'alimentation électrique (L1..L3),
un état de commutation de l'élément de commutation de l'accumulateur d'énergie (S2) ou un état du réseau d'alimentation électrique (L1..L3) étant évalué pour vérifier si l'onduleur (W) est connecté électriquement à l'accumulateur d'énergie (C) ou non.

6. Procédé selon la revendication 4 ou 5, **caractérisé en ce que** l'élément de commutation de l'accumulateur d'énergie (S2) comprend un relais d'accumulateur d'énergie ou est conçu comme tel et qu'un contact de commutation du relais d'accumulateur d'énergie relie l'onduleur (W) à l'accumulateur d'énergie (C) lorsqu'une bobine de commande du relais d'accumulateur d'énergie, qui agit sur le contact de commutation et qui est agencée dans un chemin courant situé entre l'accumulateur d'énergie (C) et le réseau d'alimentation électrique (L1..L3) est alimentée par une tension supérieure à une tension de commutation du relais d'accumulateur d'énergie et que le relais d'accumulateur d'énergie est activé, et sépare l'onduleur (W) de l'accumulateur d'énergie (C) lorsque la tension à la bobine de commande est inférieure à la tension de commutation du relais d'accumulateur d'énergie et que le relais d'accumulateur d'énergie est désactivé.

7. Système de stockage à rayonnages (1a..1c) comprenant
un appareil de desserte de rayonnages (3, 3', 3a..3e) qui présente un onduleur (W) et un moteur d'entraînement (M) pouvant être relié à celui-ci pour l'appareil de desserte de rayonnages (3, 3', 3a..3e),
un accumulateur d'énergie (C) qui est relié au moins temporairement à l'onduleur (W) et
un circuit d'alimentation (G) qui est relié à un réseau d'alimentation électrique (L1..L3) et à l'accumulateur d'énergie (C),
**caractérisé par**
un élément de commutation du moteur d'entraînement (S1) qui est conçu pour relier le moteur d'entraînement (M) à l'onduleur (W) lorsqu'une tension d'alimentation (V₁) pour l'onduleur (W) est supérieure à une première valeur-seuil de tension d'alimentation, et
pour relier le moteur d'entraînement (M) à la résistance de freinage (R) lorsque la tension d'alimentation (V₁) pour l'onduleur (W) est inférieure à la première valeur-seuil de tension d'alimentation ou à une deuxième valeur-seuil de tension d'alimentation plus basse.

8. Système de stockage à rayonnages (1a..1c) selon la revendication 7, **caractérisé en ce que** l'accumulateur d'énergie (C) est conçu comme un accumulateur d'énergie stationnaire (C) et est notamment relié électriquement à des onduleurs (W) de plusieurs appareils de desserte de rayonnages (3, 3', 3a..3e).

9. Système de stockage à rayonnages (1a..1c) selon la revendication 7 ou 8, **caractérisé en ce que** l'élément de commutation du moteur d'entraînement (S1) comprend un relais de moteur d'entraînement ou est conçu comme tel et que le moteur d'entraînement (M) peut être relié à l'onduleur (W) ou à la résistance de freinage (R) et une bobine de commande du relais du moteur d'entraînement agissant sur le contact de commutation est agencée dans un chemin courant situé entre le contact de commutation et l'accumulateur d'énergie (C).

10. Système de stockage à rayonnages (1a..1c) selon l'une des revendications 7 à 9, **caractérisé par** un élément de commutation d'accumulateur d'énergie commandable (S2) conçu pour
relier l'onduleur (W) à l'accumulateur d'énergie (C) lorsqu'une tension de réseau (V₂) du réseau d'alimentation électrique (L1..L3) est supérieure à une première valeur-seuil de tension de réseau et/ou lorsque l'accumulateur d'énergie (C) est relié électriquement au réseau d'alimentation électrique (L1..L3), et
séparer l'onduleur (W) de l'accumulateur d'énergie (C) lorsque la tension de réseau (V₂) du réseau d'alimentation électrique (L1..L3) est inférieure à la première valeur-seuil de tension de réseau ou à une deuxième valeur-seuil de tension de réseau plus basse et/ou lorsque l'accumulateur d'énergie (C) est séparé électriquement du réseau d'alimentation électrique (L1..L3).

11. Système de stockage à rayonnages (1a..1c) comprenant
un appareil de desserte de rayonnages (3, 3', 3a..3e) qui présente un onduleur (W) et un moteur d'entraînement (M) pouvant être relié à celui-ci pour l'appareil de desserte de rayonnages (3, 3', 3a..3e),
un accumulateur d'énergie (C) qui est relié au moins temporairement à l'onduleur (W) et
un circuit d'alimentation (G) qui est relié à un réseau d'alimentation électrique (L1..L3) et à l'accumulateur d'énergie (C), **caractérisé en ce**
**qu'**un élément de commutation de moteur d'entraînement (S1) qui est conçu pour relier le moteur d'entraînement (M) à l'onduleur (W) lorsque l'onduleur (W) est relié électriquement à l'accumulateur d'énergie (C), et
pour relier le moteur d'entraînement (M) à la résistance de freinage (R) lorsque l'onduleur (W) est séparé électriquement de l'accumulateur d'énergie (C),
et un élément de commutation d'accumulateur d'énergie commandable (S2) qui est conçu pour relier
l'onduleur (W) à l'accumulateur d'énergie (C) lorsqu'une tension de réseau (V₂) du réseau d'alimentation électrique (L1..L3)est supérieure à une première valeur-seuil de tension de réseau et/ou lorsque l'accumulateur d'énergie (C) est relié électriquement au réseau d'alimentation électrique (L1..L3), et
pour séparer l'onduleur (W) de l'accumulateur d'énergie (C) lorsque la tension de réseau (V₂) du réseau d'alimentation électrique (L1..L3) est inférieure à la première valeur-seuil de tension de réseau ou inférieure à une deuxième valeur-seuil de tension de réseau plus basse et/ou lorsque l'accumulateur d'énergie (C) est électriquement séparé du réseau d'alimentation électrique (L1..L3),
le système de stockage à rayonnages (1a..1c) étant en outre conçu pour vérifier si l'onduleur (W) est connecté électriquement à l'accumulateur d'énergie (C) ou non, afin d'évaluer un état de commutation de l'élément de commutation de l'accumulateur d'énergie (S2) ou un état du réseau d'alimentation électrique (L1..L3).

12. Système de stockage à rayonnages (1a..1c) selon la revendication 10 ou 11, **caractérisé en ce que**
l'élément de commutation de l'accumulateur d'énergie (S2) comprend un relais d'accumulateur d'énergie ou est conçu comme tel et que l'on peut connecter l'onduleur (W) à l'accumulateur d'énergie (C) et le séparer de celui-ci par l'intermédiaire d'un contact de commutation du relais d'accumulateur d'énergie et qu'une bobine de commande du deuxième relais agissant sur un contact de commutation du deuxième relais agissant sur le contact de commutation est agencée dans un chemin courant situé entre l'accumulateur d'énergie (C) et le réseau d'alimentation électrique (L1..L3).
